Europäisches Patentamt

European Patent Office

Office européen des brevets

(11) Publication number: **0 182 513**
A2

# EUROPEAN PATENT APPLICATION

(21) Application number: **85307669.3**

(22) Date of filing: **24.10.85**

(51) Int. Cl.⁴: **C 08 J 9/14, H 01 B 3/40,**
**C 08 G 59/02, C 08 G 59/40**

(30) Priority: **14.11.84 GB 8428778**

(43) Date of publication of application: **28.05.86**
**Bulletin 86/22**

(84) Designated Contracting States: **DE FR GB IT NL**

(71) Applicant: **EMI Limited, Blyth Road, Hayes Middlesex,
UB3 1BP (GB)**

(72) Inventor: **Hajimichael, Agathangelos, 23, Napier Road
Wembley, Middlesex (GB)**
Inventor: **Simmonds, Clive Gordon, 34, Bannister Close
Langley, Slough Berkshire, SL3 7BD (GB)**

(74) Representative: **Marsh, Robin Geoffrey et al, Thorn EMI
Patents Limited The Quadrangle Westmount Centre
Uxbridge Road, Hayes Middlesex, UB4 0HB (GB)**

(54) **Encapsulating product.**

(57) An encapsulation product includes a first liquid comprising an epoxy resin or blend of epoxy resins, a foaming agent and a surfactant, and a second liquid comprising a cross-linking agent or a blend of cross-linking agents and a catalyst. The liquids may be mixed at room temperature and allowed to react to form, within 30 minutes, an epoxy resin foam whose electrical and mechanical properties are suitable for the encapsulation of fragile electronic devices. The cross-linking agent(s) include one or more polyamines or a polymercaptan, the catalyst includes one or more tertiary amines, and the blowing agent is trichlorofluoromethane.

ACTORUM AG

: 1 :

## ENCAPSULATING PRODUCT

This invention relates to an encapsulating product. In particular it relates to such a product which is useful for the uniform encapsulation of fragile objects such as electronic components and devices. In certain applications, such objects may be subjected to extreme stress and it is necessary to encapsulate them so that they can retain their function. Encapsulation is also useful for protection from other severe environments, such as corrosive atmospheres. In cases where it is necessary not to increase the weight of the encapsulated object unnecessarily, it is very useful to encapsulate the product in a foamed resin. Materials have been commercially available for some time for use in the encapsulation of fragile objects in a foam resin, but, generally, these foam resins are based on polyurethanes. The formation of a polyurethane foam in situ, involves, of course, the handling of somewhat hazardous chemicals and in particular the isocyanate components and it is an object of the present invention to provide a product capable of encapsulating fragile objects with a foamed resin which does not suffer from this particular disadvantage.

It is a further object of the present invention to achieve, in an epoxy foam the advantages previously associated with polyurethane foams namely, the ability to blend, at room temperature, the reactants from which the foam is formed intimately and rapidly and, by proper selection of reactants to control the rate of reaction so that, whilst proceeding at a convenient rate, it does not become too fast and lead to a non-uniformly foamed and/or friable product.

Yet a further object is to provide a product which will result in an encapsulated product which may be easily depotted by the use of simple solvents such as acetone.

Accordingly, we provide a product capable of uniformly encapsulating fragile objects in an epoxy foam material, which product comprises:

(a) a liquid epoxy resin or blend of epoxy resins wherein up to 20 epoxy molar per cent of the epoxy groups may have been prereacted with a reactive material, the epoxy equivalent weight of said liquid being between 100 and 300 and the viscosity of said liquid, at $20^{o}C$ being less than 200 Pas, preferably less than 50 Pas;

(b) a liquid comprising sufficent cross-linking agent or blend of cross-linking agents to react with at least 90% of the free epoxy groups in said resin or blend of resins, said cross-linking agent or blend of cross-linking agents including one or more polyamines or a polymercaptan,

(c) A catalyst including one or more tertiary amines, a foaming agent and, preferably, a surfactant, wherein, on initial mixing of the components (a), (b) and (c) there is formed a liquid which is mobile at $20^{o}C$.

Conveniently, the product of the invention may be in the form of first and second liquid compositions, the first liquid composition comprising the liquid epoxy resin or blend of epoxy resins referred to in (a) above together with a suitable foaming agent and surfactant and the second liquid composition comprising the cross linking agent or blend of cross linking agents and a catalyst. These first and second liquid compositions can be easily and intimately mixed, for example in a high speed, high shear mixer, and the resultant mobile liquid easily applied to the components to be encapsulated. The foaming and encapsulating action is then found to proceed with reasonable speed, being completed in under 30 minutes, i.e. sufficiently fast to flow around the possibly fragile components, but not so fast as to cause any damage to the components during the encapsulating process. The relative reactivity of the materials used are selected so that a uniform, non-friable foam is produced and so that the speed of reaction throughout the foam is relatively constant, thus to avoid the production of large voids or of charring. In free rise conditions, foaming occurs without the application of any external heat but when a mould of high thermal conductivity, e.g. of aluminium is used, it may be necessary to pre-heat the mould and/or moderately apply external heat during foaming.

We prefer that the total molar equivalent of the reactive groups in the said resin or blend of resins should be in slight excess of the total molar equivalent of the reactive groups in said cross linking agent or agents. This of course means that any excess reactive groups are epoxy rather than active hydrogen such as amine or mercaptan and epoxy groups can homopolymerise in the presence of the tertiary amine catalysts leaving no unreacted groups so any risk of corrosion is minimised.

It is also preferred, in one aspect of the invention that up to 20 molar equivalent per cent of the epoxy groups of said liquid resin or blend of resins should have been re-reacted with a reactive material such as an aromatic polyamine. Examples of such an aromatic polyamine include diaminodiphenylmethane and diaminodimethylsulphone.

Suitable liquid epoxy resins are those derived from a diglycidyl ether of bis-phenol A having an epoxy equivalent weight of from 180 to 250 and, where a blend of epoxy resins are used, this may comprise an epoxy resin derived from a diglycidyl ether of bis-phenol A and an epoxy Novalac resin having an epoxy equivalent weight of from 150 to 200 and/or an N-glycidylamine having an epoxy equivalent weight of from 100 to 150 and containing up to 50 molar per cent blended epoxy groups, the blend having a total epoxy equivalent weight of from 145 to 250.

Most usefully, the epoxy equivalent weight of said liquid epoxy resin is between 180 and 200 and the viscosity of said liquid is between 9 and 100 Pas.

The cross linking agent or blend of cross linking agents in the liquid referred to under (b) above may be one or more polyamines. Preferably a blend is employed and comprises a first polyamine of molar equivalent weight less than 30 and a second polyamine of molar equivalent weight greater than 90 wherein the molecular ratio of reactive groupings in said first polymine as compared with said second polyamine is between 10:1 and 4:1. A preferred example of the first polyamine is diethylenetriamine. Suitable materials for use as the second polyamine include an aliphatic polyether diamine such as a polyoxypropylene diamine of molar equivalent weight 500. An aromatic polyamine such as diaminodiphenylmethane may be added as a third polyamine if not used in an adduct.

Alternatively, the cross linking agent may be a polymercaptan such as an aliphatic trimercaptan of molar equivalent weight between 100 and 300.

The catalyst may preferably be an amine accelerator such as Ancamine AD (which is a blend of modified aliphatic amines with tertiary amine and phenolic accelerators) or a tertiary amine such as triethanolamine or tris (dimethylaminomethyl) phenol.

We have found that the most convenient blowing agent is trichlorofluoromethane, and, as surfactant, a silicone glycol copolymer or a polyoxyethylene sorbitan soap.

The preferred second liquid composition comprising the cross linking agent or blend of cross linking agents and a catalyst will conveniently have a viscosity less than 20 Pas and, typically, less than 1 Pas.

According to our invention we also provide an epoxy foam material produced by mixing the components (a), (b) and (c) and allowing them to react. The resultant foam has a compressive strength (as measured according to British Standard No. 4370) of from 0.2 to 1.0 $MN/m^2$, preferably 0.5 to 1.0 $MN/m^2$; a density of from 0.05 to 0.30 $g/cm^3$, preferably 0.05 to 0.15 $g/cm^3$; and a dimensional stability (as measured according to British Standard No. 4370) of less than 3.0%. Other properties possessed by materials having a density between 0.05 and

$0.15 \text{g/cm}^3$ include a volume resistivity (as measured according to British Standard No. 903) of from $0.05.10^{12}$ to $4.0.10^{12}$ ohm.m; a thermal conductivity of from 0.03 to 0.05 W/mK; a dielectric constant at 1.4 GHz of from 1.10 to 1.20; and a $\tan \delta$ of not more than 0.006.

Furthermore the foam can be easily broken down by simple solvents, such as acetone, which is of course useful for the recovery, without serious damage, of any encapsulated components.

We further provide an assembly comprising an electronic component encapsulated in the epoxy foam of this invention and a final aspect of our invention is the individual materials which are suitable for use as the first liquid composition or as the second liquid composition in the product of our invention.

The invention will now be described but is in no way limited by the following examples.

### EXAMPLE 1.

(a)  The epoxy resin based on a diglycidyl ether of bis-phenol A, commercially available from Shell under the name Epikote 828 (190 parts by weight) was heated to $120^{\circ}$C with stirring and there was then added to it diaminodiphenylmethane (9.4 parts by weight). After allowing the mixture to react for 1 hour, it was cooled to room temperature. The resultant product, wherein 10 epoxy molar per cent of the epoxy groups present in the original Epikote 828 had been prereacted, had an epoxy equivalent weight of 171 and its viscosity at $20^{\circ}$C was in the range 150 to 200 Pas. It was then blended with trichlorofluoromethane (blowing agent, 11 parts by weight) and a silicone glycol copolymer available from Chemical Services & Distribution under the name Polyurax SC120 (3.4 parts by weight) and the resultant blend stored in an air tight, refrigerated ($0-15^{\circ}$C) container until required for the next stage of the process. This blend represents the "first liquid composition" as hereinbefore described.

(b)  Diethylenetriamine (molar equivalent weight 20.7, 13.8 parts by weight) was blended with polyoxypropylene diamine of molar equivalent weight 500 available from Texaco Co. Ltd. under the name Jeffamine 2000 (40 parts by weight) and, as catalyst, triethanolamine (6.8 parts by weight). This blend represents the "second liquid composition", as hereinbefore described, and had a viscosity of 0.3 Pas. The molar ratio of reactive groupings in the diethylenetriamine to those in the Jeffamine 2000 was 8:1.

(c) The first and second liquid compositions were blended together at $20^o$C using a high speed, high shear mixer, e.g. that produced under the name Silverson for 45 to 60 seconds. The resultant product, which was a mobile liquid, was poured into a mould containing the components to be encapsulated. Foaming commenced within 5 to 10 minutes of mixing and, within 30 minutes the resultant foam was easily handleable.

The foam produced had the following properties:

| | |
|---|---|
| Compressive strength: | 0.40 to 0.50 $MN/m^2$ |
| Density: | 0.15 $g/cm^3$ |
| Dimensional stability: | less than 2% |
| Volume resistivity: | $0.30.10^{12}$ ohm.m |
| Thermal conductivity: | 0.047 W/mK |
| Dielectric constant at 1.4 GHz: | 1.14 |
| Tan $\delta$ : | 0.004 |

## EXAMPLE 2.

(a) The procedure of part (a) Example 1 was followed, except that only 6 parts by weight of trichlorofluoromethane was included in the blend which resulted in the first liquid composition.

(b) The procedure of part (b) Example 1 was followed, but the parts by weight of diethylenetriamine and Jeffamine were respectively 11.9 and 50 and the catalyst used was Ancamine AD (11 parts by weight - available from Anchor Chemicals). In this case the viscosity of the second liquid composition was 0.30 Pas and the molar ratio of reactive groupings in the diethylenetriamine to those in the Jeffamine 2000 was 6:1.

(c) The first and second liquid compositions were blended and the resultant blend foamed, as described in part (c) of Example 1.

The foam produced had the following properties:

Compressive strength: ........ 0.25 $MN/m^2$

Density:  ................... 0.1 $g/cm^3$

Dimensional stability: ....... less than 1.5%

Volume resistivity: .......... $0.16.10^{12}$ ohm.m

Thermal conductivity: ........ 0.045 W/mK

Dielectric constant at 1.4 GHz: 1.15

Tan $\delta$ ...................... 0.004

## EXAMPLE 3.

(a)  In this Example, Epikote 828 was used as the liquid epoxy resin without any prereaction of epoxy groups.  This material has an epoxy equivalent weight of 190 and a viscosity at $20^o$C of 10 Pas.  The Epikote 828 (190 parts by weight) was blended with trichlorofluoromethane (11 parts by weight) and Polyurax SC 120 (4 parts by weight) to produce the first liquid composition.

(b)  The second liquid composition was produced by pre-heating Jeffamine 2000 (40 parts by weight) to $100^o$C, adding thereto diaminodiphenylmethane (5.2 parts by weight) and when the latter had after 10 minutes of continued heating at $100^o$C, dissolved in the former, cooling the resultant liquid to $20^o$C. Diethylene triamine (15.9 parts by weight) and triethanolamine (6.8 parts by weight) were then blended in to give a resultant second liquid composition of viscosity 0.3 to 0.4 Pas and wherein the ratio of reactive groupings in the diethylenetriamine to the total in both the Jeffamine 2000 and the diethylene triamine was 10:1.

(c)  Using the same procedure as described in part (c) of Example 1, the first and second liquid compositions were blended and the resultant blend foamed.

The foam produced had the following properties:

Compressive strength: ......... 0.4 to 0.5 $MN/m^2$

Density: ..................... 0.1 $g/cm^3$

Dimensional stability: ........ less than 1%

Volume resistivity: ........... $0.12.10^{12}$ ohm.m

Thermal conductivity: ......... 0.048 W/mK

Dielectric constant at 1.4 GHz: 1.10

Tan $\delta$ ..................... less than 0.001

## EXAMPLE 4.

(a)  Epikote 828 (190 parts by weight), trichlorofluoromethane (11 parts by weight) and a silicone glycol copolymer available from Dow Corning under the name DC 193 (3.4 parts by weight) were blended to give the first liquid composition.

(b)  An aliphatic trimercaptan of molar equivalent weight 300 and available commercially from Diamond Shamrock under the name Capcure 3800 (47.5 parts by weight), was blended with, as catalyst, tris (dimethylaminomethyl) phenol (19 parts by weight) to give the second liquid composition, the viscosity of which was 12 to 13 Pas.

(c)  Using the same procedure as described in part (c) of Example 1, the first and second liquid compositions were blended and the resultant blend foamed.

The foam produced had the following properties:

Compressive strength: ........ 0.60 to 0.70 $MN/m^2$

Density: ................... 0.10 $g/cm^3$

Dimensional stability: ....... less than 3%

Volume resistivity: ......... $0.05.10^{12}$ ohm.m

Thermal conductivity: ....... 0.041 W/mK

Dielectric constant at 1.4 GHz: 1.19

Tan $\delta$ ..................... 0.006

## EXAMPLE 5.

(a)  An epoxy Novalac resin having an epoxy molar equivalent of 180 and available commercially from Ciba Geigy under the name Araldite LY558 (36 parts by weight) was heated to 100°C and blended at this temperature with Epikote 828 (152 parts by weight) for 10-15 minutes. The resultant liquid was cooled to 20°C, at which temperature its viscosity was 100 Pas. The epoxy equivalent weight was 187. This material was then blended with trichlorofluoromethane (11 parts by weight) and DC193 (3.4 parts by weight) to give the first liquid composition.

(b)  The second liquid composition was identical to that described in part (b) of Example 4.

(c)  Using the same procedure as described in part (c) of Example 1, the first and second liquid compositions were blended and the resultant blend foamed.

The foam produced had the following properties:

Compressive strength: ....... 0.6 to 0.7 $MN/m^2$

Density: ................... 0.1 $g/cm^3$

Dimensional stability: ...... less than 15% when tested at room temperature; the stability was less than 3.0%

Volume resistivity: .......... $3.3.10^{12}$ ohm.m

Thermal conductivity: ........ 0.045 W/mK

Dielectric constant at 1.4 GHz: 1.15

Tan $\delta$ ....................... 0.005

## EXAMPLE 6.

(a) In this Example the epoxy resin Epikote 828 was heated to $120^{\circ}C$ with stirring and there was then added to it diaminodiphenyl sulphone (11 parts by weight). After allowing the mixture to react for 1 hour, it was cooled to room temperature. The resultant product wherein up to 18 epoxy molar per cent of the original Epikote 828 had been pre-reacted had an epoxy equivalent of 152 and its viscosity at $20^{\circ}C$ was less than 200 Pas. It was then blended with trichlorofluoromethane (blowing agent 11 parts by weight) and a polyoxyethylene sorbitan soap, available from BDH Chemicals under the name Tween 20 (3.4 parts by weight) and the resultant blend stored in an air tight container and refrigerated (0-15$^{\circ}$C) until required. This blend represents the "first liquid composition" as hereinbefore described.

(b) Diethylenetriamine (10 parts by weight) was blended with an alicylic amidoamine available from Cray Valley Products under the name Versamid 125 (molar equivalent weight 168, 18 parts by weight) and as catalyst, triethanolamine (3.4 parts by weight). This blend represents the "second liquid composition", as hereinbefore described and has a viscosity of 1 Pas. The molar ratio of reactive groupings in the diethylenetriamine to those in the Versamid 125 was 4:1.

(c) Using the same procedure as described in part (c) of Example 1, the first and second liquid compositions were blended and the resultant blend foamed.

The foam produced had the following properties:

Compressive strength: ........ 0.36 MN/m$^2$

Density: .................... 0.1 g/cm$^3$

Dimensional stability: ....... less than 1%

Volume resistivity: .......... 0.3 x 10$^{12}$ ohm.m

Thermal conductivity: ........ 0.03 W/mK

Dielectric constant at 1.4 GHz: 1.1

Tan $\delta$ ..................... 0.0046

## EXAMPLE 7.

(a) The procedure of part (a) Example 1, was followed except that only 5.2 parts by weight of diaminodiphenylmethane was included in the blend which resulted in the first liquid composition.

(b) The procedure part (b) Example 1, was also followed except that 15.9 parts by weight of diethylenetriamine was included in the blend which resulted in the second liquid composition, and had a viscosity of 0.3 Pas. The molar ratio of reactive groupings in the diethylenetriamine to those in the Jeffamine D2000 was 10:1.

(c) Using the same procedure as described in part (c) of Example 1, the first and second liquid compositions were blended and the resultant blend foamed.

The foam produced had the following properties:

Compressive strength: ........ 0.40-0.50 MN/m$^2$

Density: .................... 0.15 g/cm$^3$

Dimensional stability: ....... less than 2%

Volume resistivity: .......... 0.3 x 10$^{12}$ ohm.m

Thermal conductivity: ........ 0.047 W/mK

Dielectric constant at 1.4 GHz: 1.14

Tan $\delta$ ..................... 0.004

## CLAIMS

1. A product comprising

(a) a liquid epoxy resin or blend of epoxy resins wherein up to 20 epoxy molar per cent of the epoxy groups may have been prereacted with a reactive material, the epoxy equivalent weight of said liquid being between 100 and 300 and the viscosity of said liquid, at $20^{o}C$, being less than 200 Pas, preferably less than 50 Pas;

(b) a liquid comprising sufficent cross-linking agent or blend of cross-linking agents to react with at least 90% of the free epoxy groups in said resin or blend of resins; and

(c) a catalyst, a foaming agent and, preferably, a surfactant;

wherein, on initial mixing of the components (a), (b) and (c) there is formed a liquid which is mobile at $20^{o}C$ and capable of reacting to form an epoxy foam material characterised in that, to render said epoxy foam material suitable for the uniform encapsulation of fragile devices, said catalyst includes one or more tertiary amines and said cross-linking agent or blend of cross-linking agents includes one or more polyamines or a polymercaptan.

2. A product according to Claim 1 in the form of a first and second liquid compositions, the first liquid composition comprising the liquid epoxy resin or blend of epoxy resins according to Claim 1, the foaming agent and a surfactant, and the second liquid composition comprising the cross linking agent or blend of cross linking agents and the catalyst.

3. A product according to Claim 1 or Claim 2 wherein the total molar equivalent of reactive groups in said resin or blend of resins is in slight excess of the total molar equivalent of reactive groups in said cross linking agent or agents.

4. A product according to any one of Claims 1 to 3 wherein from 5 to 20 molar equivalent per cent of the epoxy groups of said liquid resin or blend of resins have been prereacted with a reactive material.

5.  A product according to Claim 4 wherein said reactive material is an aromatic polyamine.

6.  A product according to Claim 5 wherein said polyamine is diaminodiphenylmethane or diaminodimethylsulphone.

7.  A product according to any one of the preceding claims wherein said liquid epoxy resin is derived from a diglycidyl ether of bis-phenol A having an epoxy equivalent weight of from 180 to 250.

8.  A product according to any one of Claims 1 to 6 wherein a blend of epoxy resins is used said blend comprises an epoxy resin derived from a diglycidyl ether of bis-phenol A and an epoxy Novalac resin having an epoxy equivalent weight of from 150 to 200 and/or an N-glycidylamine having an epoxy equivalent weight of from 100 to 150 and containing up to 50 molar per cent blended epoxy groups.

9.  A product according to any one of the preceding claims wherein the epoxy equivalent weight of said liquid epoxy resin is between 180 and 200 and the viscosity of said liquid is between 9 and 100 Pas.

10.  A product according to any one of the preceding claims wherein a blend of cross linking agents is employed and wherein said blend comprises a first polyamine of molar equivalent weight less than 30 and a second polyamine of molar equivalent weight greater than 90 wherein the molecular ratio of reactive groupings in said first polyamine as compared with said second polyamine is between 4:1 and 10:1.

11.  A product according to Claim 10 wherein said first polyamine is diethylenetriamine.

12.  A product according to Claim 10 or Claim 11 wherein said second polyamine is an aliphatic polyether diamine such as a polyoxypropylene diamine and where an aromatic polyamine such as diaminodiphenylmethane may be added as a third polyamine when not used in an adduct.

13.  A product according to any one of Claims 1 to 9 wherein said cross linking agent comprises an aliphatic trimercaptan of molar equivalent weight between 100 and 300.

14. A product according to any one of the preceding claims wherein said catalyst comprises triethanolamine.

15. A product according to any one of the preceding claims wherein said catalyst comprises tris (dimethyl-aminomethyl) phenol.

16. A product according to any one of the preceding claims wherein said catalyst comprises a blend of modified aliphatic amines with tertiary amine and phenolic accelerators such as Ancamine AD.

17. A product according to any one of the preceding claims wherein said blowing agent is trichlorofluoromethane.

18. A product according to any one of the preceding claims wherein said surfactant is a silicone glycol copolymer or a polyoxyethylene sorbitan soap.